Europäisches Patentamt

European Patent Office

Office européen des brevets

(11) Publication number: **0 138 461**
A2

# EUROPEAN PATENT APPLICATION

(21) Application number: 84306569.9

(22) Date of filing: 27.09.84

(51) Int. Cl.⁴: **B 25 J 19/00**

(30) Priority: 03.10.83 US 538226

(43) Date of publication of application: 24.04.85
Bulletin 85/17

(84) Designated Contracting States: DE FR GB IT NL SE

(71) Applicant: **AMERICAN TELEPHONE AND TELEGRAPH COMPANY, 550 Madison Avenue, New York, NY 10022 (US)**

(72) Inventor: **Beni, Gerardo, 81 Halberd Court, Old Bridge New Jersey 08857 (US)**
Inventor: **Hackwood, Susan, P.O. Box 169, Holmdel New Jersey 07733 (US)**
Inventor: **Hornak, Lawrence Anthony, 1758 Raleigh Court East Building 7 Apartment 36A, Ocean New Jersey 07712 (US)**

(74) Representative: **Lawrence, Brian Richard et al, Western Electric Company Limited 5, Mornington Road, Woodford Green Essex IG8 OTU (GB)**

(54) **Protective robot covering.**

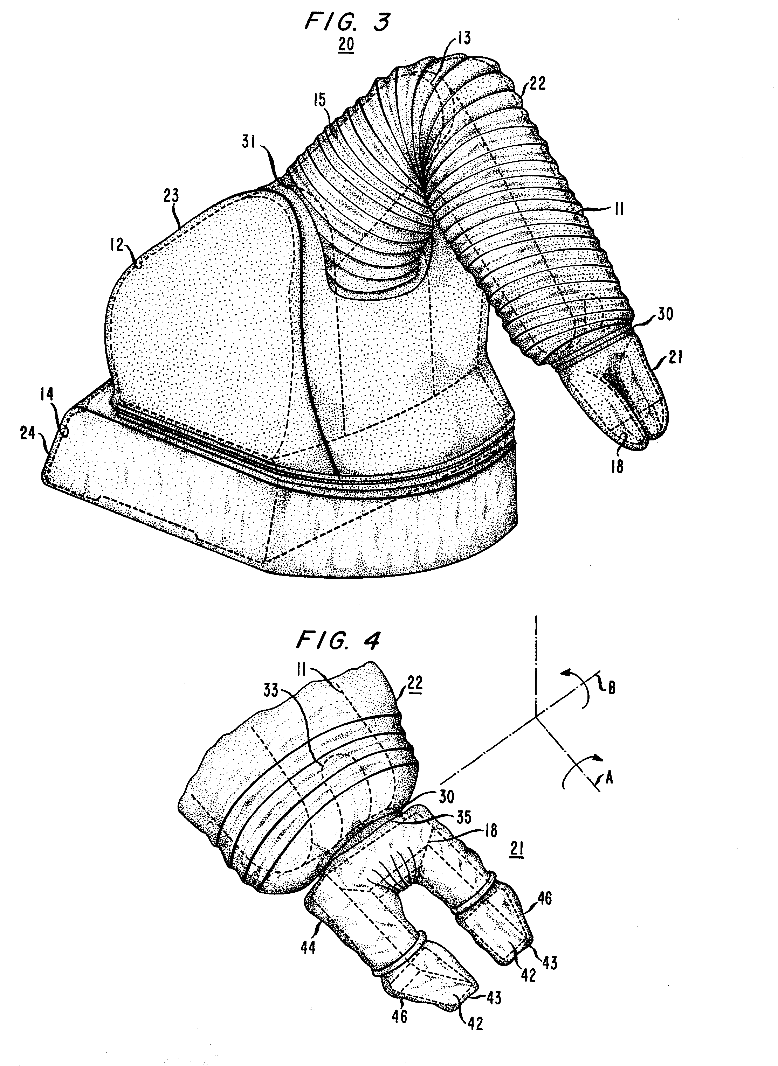

(57) A robot covering (20) allows a robot (10) to operate in a clean room or a hostile environment. A specific design is described for a small, light assembly, anthropomorphic robot. The cover, which is made from high density chlorethylene and Teflon, includes four parts: coverings (21, 22, 23, 24) for the hand and wrist; the forearm, upper-arm and shoulder; the lower body; and the base. The extension of the general features to a large class of robot arms is also described. (Figure 3)

EP 0 138 461 A2

## PROTECTIVE ROBOT COVERING

### Background of the Invention

This invention relates to the field of robotics and, more particularly, to robots for use in clean rooms and hostile environments.

Robots can carry out, at least in principle, many tasks which are difficult or nearly impossible for human beings because of special environmental conditions. For example, robots could perform in extremes of temperature and pressure as well as in corrosive or dangerous environments. Conversely, they could operate without polluting the environment, e.g., in clean rooms.

All of these operations are possible in principle, but they require in general a complete redesign of the robot for each task. Since the robot is inherently a reprogrammable machine capable of many different functions, redesigning the whole robot to meet special environmental conditions defeats one of the primary advantages of the robot itself.

Recently a number of small robot arms that have sufficient speed, accuracy and flexibility to handle small scale assembly operations have become available. These robots open up new possibilities in automating materials processing, particularly semiconductor manufacturing and research. See, for example, G. Beni, _Journal of Electroanalytical Chemistry and Interfacial Electrochemistry_, Vol. 140, p. 137 (1982). Semiconductor processing involves a combination of chemical and physical processes. These must be repeated accurately but may be changed frequently. For example, the electrodeposition of metal-semiconductor junctions on GaAs materials is carried out by a precise sequence of steps. The electroplating process can be computerized, and the material handling roboticized as described by G. Beni et al, _Journal of Applied Electrochemistry_, Vol. 13 (1983).

Semiconductor processing requires non-polluting operation and protection from chemical attack. Much of this work is carried out in an environment which is corrosive to the robot parts. For example, a robot can polish GaAs, but the metal parts are attacked by the corrosive vapor from the bromine/methanol polishing solution. A further drawback is that many processes must be carried out in a dust-free, clean environment. Although environmental contamination can be reduced by avoiding hydraulic and pneumatic robot parts, contamination from dirty electric motors, oil drops, etc., is always a possibility.

Summary of the Invention

A robot covering in accordance with our invention allows a robot to operate in a clean room or in a hostile environment. The covering is segmented and interconnected with the robot to permit motion of the robot parts through a plurality of axes of rotation. The interior of the covering may be maintained under positive pressure to keep contaminants in the exterior ambient from attacking the robot parts, or it may be maintained under negative pressure to keep contaminants generated by the robot from entering the ambient (e.g., a clean room). In one embodiment the covering for an anthropomorphic robot illustratively includes four parts: (1) a hand/wrist covering, (2) a forearm/upper arm/shoulder covering, (3) a lower body covering, and (4) a base covering.

Brief Description of the Drawing

The invention, together with its various features and advantages, can be readily understood from the following more detailed description taken in conjunction with the accompanying drawing, in which:

FIG. 1 shows the operating envelope of a robot arm in top view;

FIG. 2 shows the operating envelope of the same arm in side view;

FIG. 3 is a perspective view of a covering for a robot arm in accordance with an illustrative embodiment of our invention;

FIG. 4 is an enlarged view of the hand/wrist covering of FIG. 3;

FIG. 5 is a cross sectional view of the wrist joint of FIG. 3;

FIG. 6 is a different perspective of a robot arm of FIG. 3 with the covering removed to expose plates which prevent the covering from becoming entangled with elbow and shoulder joints;

FIG. 7 is an enlarged perspective of the lower body covering of FIG. 3; and

FIG. 8 is an enlarged perspective of the base covering of FIG. 3.

Detailed Description

Cover Material

An important consideration in designing a robot cover is the cover material which should offer resistance against a wide range of chemicals, e.g., acetone, methanol, bromine and mineral acids. The material should also be lightweight and flexible so as not to obstruct or interfere with the torque requirements of the robot. The physical properties such as abrasion tear and puncture resistance should be sufficient for the desired application. The materials should also be bondable and capable of making high strength seals around the robot. A composite structure of a number of layers of different materials could also be used.

A number of plastic materials are possible choices for the robot cover. Teflon$^{TM}$ (a trademark of Dow Corning Corporation) is the most suitable from the standpoint of chemical stability, but it is difficult to bond and not very pliable. We prefer to make the flexible parts of our robot cover from high density (~100 μm thick) chlorinated polyethylene such as Chloropel$^{TM}$ (a trademark of ILC Dover of Dover, Delaware). Chloropel is resistant to most of the chemicals found in semiconductor processing. It is also robust and can be repaired easily if damaged. Permanent seals can be made by heat bonding or by dielectric sealing. Reversible seals (of the "zip-lock" type) can also be made in Chloropel. Parts of the protective cover need to be made of a low friction, rigid material. For this purpose we have used Teflon with well-known chemically or electrochemically pretreated surfaces to allow bonding to the Chloropel.

Many plastic materials are non-contaminating, and, when encapsulating a robot, they will prevent it from contaminating the environment. However, they are not suitable for operation in extremes of temperature or pressure. There are other materials designed for this purpose; e.g., aluminized beta-glass is used in gloves made for high temperature and potentially explosive environments.

## Cover Design

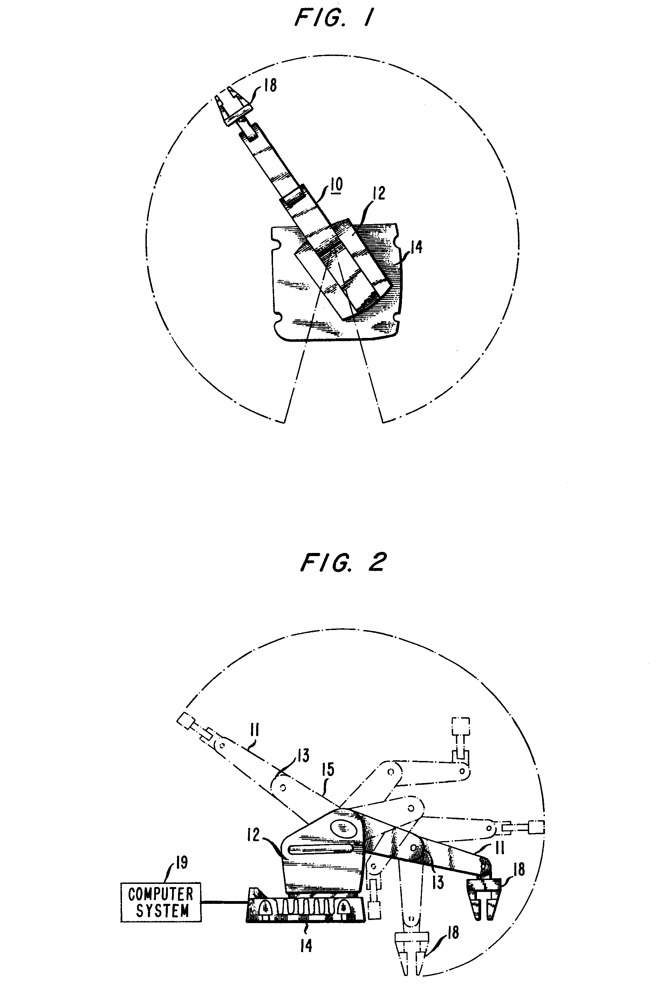

The robot 10 shown in FIGS. 1-2 is an anthropomorphic, five revolute-axis, cable-operated arm pivotally mounted on a housing 12 which, in turn, is rotatably mounted on a base 14. A six stepper motor drive (not shown) is contained within housing 12. At the extremity of the arm a hand 18 opens and closes in a continuous motion. The arm and hand motion is under control of a computer system 19. The operating envelope of the arm is shown in top view in FIG. 1 and in side view in FIG. 2. A protective suit should restrict this motion as little as possible.

In accordance with one embodiment of our invention a cover 20 for the robot 10 (in phantom in FIG. 3) is segmented into four parts: part 21 covers the wrist 30 and hand 18: part 22 covers the forearm 11, elbow 13, upper-arm 15 and part of the shoulder 31; part 23 covers the remainder of the shoulder and the lower body housing 12; and part 24 covers the base 14.

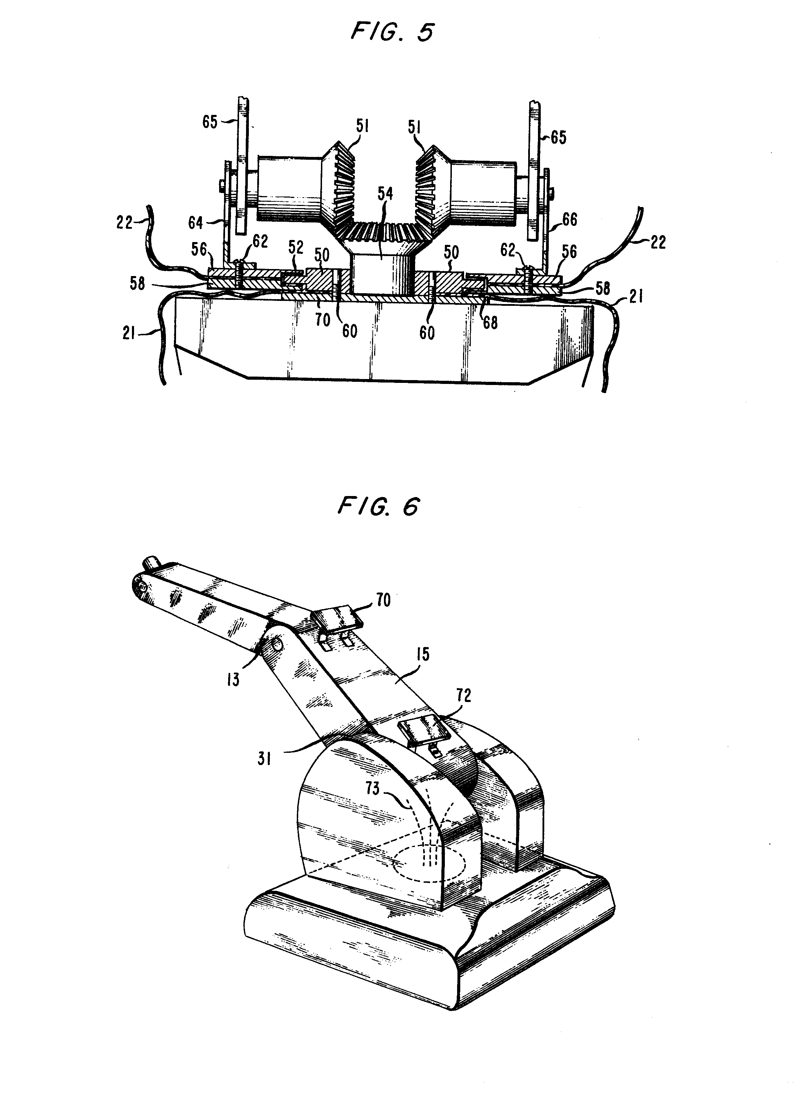

The wrist 30, as shown in FIG. 4, can rotate around two orthogonal axes; i.e., it rolls about axis A and pitches (into slot 33) about axis B. The removable metal hand 18 has a cable (not shown) running inside the forearm 11 to the top of each finger 42. It is important that this part of the robot be well protected as it is likely to be in the most vulnerable position. Although the metal hand 18 could be replaced by one constructed of a chemically resistant material, e.g., Teflon, and the cables could be enclosed within the structure, we have chosen a simpler solution. We cover the existing hand with a glove of chemically resistant material; that is, a tube 44 of flexible material (with sealed ends at 43 and a circular hole cut out of the side at 35 to accommodate wrist 30) fits over the fingers 42 and is joined to a collar (68 of FIG. 5) of hand cover 21 that attaches at the wrist 30. The fingers 42 are further protected by placing finger cots 46 over the tips. These are replaceable and hold any excess material tightly.

The wrist mechanism, shown in FIG. 5, includes a well-known differential gear arrangement 51 which permits pitch and roll motion of the hand as described above. The wrist joint includes rings 50, 56 and 58 of chemically resistant material such as Teflon. Ring 50 has a tongue 52 cut around the outside perimeter and is attached to plate 70 on the end shaft 54 by Teflon screws (two are shown at 60). Rings 56 and 58 are grooved on one side along their inside diameter. When rings 56 and 58 face one another the grooves form a channel into which tongue 52 fits, thereby allowing ring 50 to rotate relative to rings 56-58. Rings 56 and 58 are also held in place by Teflon screws (two are shown at 62) and are firmly attached to the chassis (forearm portion 65) of the robot by brackets 64 and 66. The tension on the screws 62 is increased until there is a seal between ring 50 and rings 56-58. Because the rings are made of Teflon, they do not bind, but allow free rotation while still maintaining an adequate seal. The collar 68 of hand cover 21 is attached (e.g., glued or heat sealed) to the top plate 70 of the gripper to provide a sealing function. Optionally, the collar may be clamped between plate 70 and ring 50 and the tension increased between them by means of the screws shown at 60. Thus, the hand covering 21 is attached to the end shaft of the robot and can rotate when the hand rotates. The forearm cover 22 is mechanically sealed between rings 56 and 58.

As shown in FIG. 3, the forearm 11, elbow 13, upper-arm 15 and a portion of the shoulder of the robot 10 are covered by part 22, a flexible bellows that tapers at the wrist 30 and widens at the shoulder 31. The bellows is constructed by covering a rigid cone of suitable dimensions with the flexible material. Steel wire about 1 mm in diameter is spiraled around the cone with a spacing of about 1 cm. A second layer of flexible material is wrapped over this and the two surfaces bonded together. This construction allows for flexibility at the elbow and shoulder joints. The bellows at the shoulder is permanently sealed to the body cover 23.

In cases where the material of the bellows is highly flexible, provision may be made to ensure that the bellows does not become entangled with the joint mechanisms when they move; i.e., as shown in FIG. 6 two plates 70 and 72 of aluminum 2 cm x 2 cm are attached to the upper-arm 15 of the robot, parallel to and about 2 cm above the surface of the upper-arm. One plate 70 is attached close to the elbow 13 and the other plate 72 is attached near the shoulder 31.

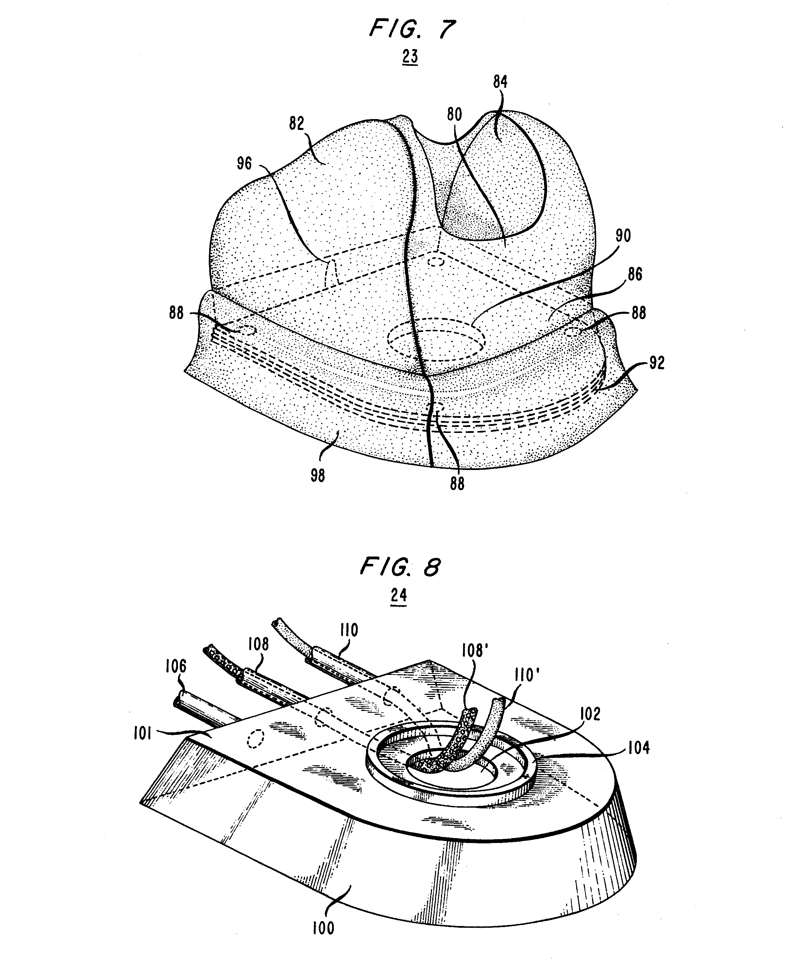

Part 23 of the robot cover, shown in FIG. 7, covers the lower body housing 12. It includes two parts: a flexible covering and a rigid plate. The former has three sections 80, 82 and 84 which are seamed (by heat sealing together) to loosely follow the contours of the robot housing 12. The rigid plate 86, a piece of Teflon about 5 mm thick, is attached to the base of the robot body by four Teflon screws 88. A hole 90 accommodates the well-known base pulley system (not shown) and central axis of the robot.

It is important that the body cover can be removed to allow access to the stepper motors and drive mechanisms inside housing 12 of the robot. Access is achieved by bonding a "zip-lock" type seal 92 made of two parallel sealing lips onto the edge of rigid Teflon plate 86. The flexible cover has a ridge around the edge which clips into the parallel lips. The cover also has a slit 96 cut up the back to allow for slack in the material and easy opening and closing. The slit can be held in place by a "velcro"-type fastener (not shown). To remove the body cover requires only undoing this seal and rolling the cover off the robot. This seal could be made from a series of "zip-lock" seals for extra protection. A flap of material forms a skirt 98 around the base over the seal.

As shown in FIG. 8, the final part 24 of the cover is for the robot base. A rigid enclosure 100 of Teflon is made to project ˜6 cm in front of the robot (not shown). This arrangement does not significantly obstruct the workspace. (It should be noted that the robot could operate mounted on its side or upside-down.) The top surface 101 of enclosure 100 has a hole 102 of the same dimensions as the hole 90 of plate 86 (FIG. 7). The central axis of rotation and the tendons 73 of the pulley system (FIG. 6) pass through these holes. In general, portions of the control mechanism for robot motion pass through these holes: e.g., the mechanical drive mechanism, electrical cables, and hydraulic or air tubes, depending on the particular robot design. A ring 104 of compliant material (e.g., sponge-like material) is bonded to surface 101 so as to surround hole 102 (optionally ring 104 may be bonded to plate 86). The ring 104 is thus sandwiched between the plate 86 and surface 101, but it is attached to only one so that rotation of the robot base causes the plate 86 to slip over the compliant material. This arrangement forms a simple but effective seal.

The electric cables 106, air inlet tube 108 and air outlet tube 110 entering the base of the robot are wrapped in Teflon tape. As this part of the robot is likely to be the most remote from any hazard, no further sealing is necessary.

Attention should be paid to temperature considerations because the motors and drive mechanism of the robot generate heat. The amount of heat depends on the duration and speed of robot motion. An estimate of the power from the six stepper motors is about 0.5 W. The electronic circuitry in the base should not exceed 38°C. Therefore, a cooling mechanism should be employed. This is accomplished by feeding an air pipe 108' from inlet tube 108 up through the central axis and allowing a continuous circulation of cool air. The feed air pipe has a number of perforations along its length to allow air flow through the body of the robot. The return air pipe 110' is connected to outlet 110.

The positive pressure inside the robot has an added advantage. It is unlikely that all seals are perfectly airtight. Because the air pressure inside the suit is higher than the surrounding environment, harmful vapors cannot enter the suit.

If the cooling system proves to be inadequate, or if the robot is required to work in higher temperatures, it may be necessary to provide additional protection. A close fitting flexible sleeve incorporating a network of flexible tubing through which cooling liquid flows can be designed. Alternatively, a urethane coated nylon sleeve with integral tubes can carry the cooling liquid. A refrigeration unit and an outer material capable of withstanding high temperatures (e.g., aluminized beta-glass) could allow the robot to operate in high temperature environments.

## Claims

1. A robotic system comprising:

a robot (10) having a base (14) and at least one movable part mounted on said base,

CHARACTERIZED BY

means (19) for controlling the motion of the part (12, 15), and

cover means (20) surrounding the robot and including means (50, 56:104) forming a seal between the ambient interior to the cover means (20) and the ambient exterior thereto, and means (51, 54) for permitting the motion of the part without disrupting the seal.

2. A robotic system in accordance with claim 1 FURTHER CHARACTERIZED BY

a housing (12) moveably mounted on the base (14),

an arm (12, 15) rotatably mounted on the housing,

a gripper (18) rotatably mounted on the arm,

means (19) for controlling the motion of the housing, arm and gripper, and that

the base, housing, arm and gripper are surrounded by a cover (20).

3. The system in accordance with claim 2, CHARACTERIZED IN THAT the cover (20) further includes:

a rigid first part (24) covering the base (14), the first part having a surface with a first aperture (102) therein through which a portion (73) of the controlling means (19) extends,

a second part (23) covering the housing, the second part including a flexible upper portion (80, 82, 84) and attached thereto a rigid plate (86) having a second aperture (90) therein aligned with the first aperture and through which the portion (73) of the controlling means (19) extends, and wherein

the seal forming means includes a compliant ring (104) which is affixed to either the surface or the plate and which surrounds the apertures.

4.   The system in accordance with claim 2,
CHARACTERIZED IN THAT the cover (20) further includes:

a flexible third part (22) comprising a bellows
surrounding the arm,

a flexible fourth part (21) covering the gripper
(18), and wherein

the seal forming means includes a wrist mechanism
(Fig. 5) to which the third and fourth parts (21, 22) are
attached.

5.   The system in accordance with  claim 4,
CHARACTERIZED IN THAT the wrist mechanism comprises:

a gear (51) arrangement (51) for controlling the
motion of the gripper (18) relative to the arm, the
arrangement including a shaft (54) disposed within the arm,

first ring means (50) attached to the shaft,

second ring means (56) rotatably engaging the
first ring means and being attached to the arm,

the third part of the cover being attached to
the second ring means, and

the fourth part (21) of the cover (20) being
attached to the shaft (54).

6.   The system in accordance with any of claims 2
to 5, further

CHARACTERIZED BY

means for maintaining the ambient interior to
the cover at a positive pressure relative to the ambient
exterior thereto.

7.   The system in accordance with any of claims 2
to 5,

CHARACTERIZED BY

means (108, 110) for maintaining the ambient
interior to the cover at a negative pressure relative to
the ambient exterior thereto.

8.   The system in accordance with any of claims 2
to 5,

CHARACTERIZED IN THAT

the cover (20) comprises chemically resistant material.

9.   The system in accordance with claim 8, CHARACTERIZED IN THAT

the material comprises chlorinated polyethylene.

FIG. I

FIG. 2

*FIG. 3*

*FIG. 4*

0138461

FIG. 5

FIG. 6

0138461

## FIG. 7

23

## FIG. 8

24